# DEMANDE DE BREVET EUROPEEN

(11) **EP 3 168 817 A1**
(43) Date de publication de la demande: **17.05.2017**
(21) Numéro de dépôt: 16198279.8
(22) Date de dépôt: 10.11.2016
(51) Int. Cl.: G07G 1/00, G06Q 20/20

(54) **CAISSE ENREGISTREUSE MODULABLE**

(30) Priorité: 13.11.2015 FR 1560914
(71) Demandeur: Ingenico Group, 75015 Paris (FR)
(72) Inventeur: LARNAC, Alexandre, 44640 LE PELLERIN (FR); GOMBAULT, Camille, 91440 BURES SUR YVETTE (FR); DEDIEU, Philippe, 07500 GUILHERAND-GRANGES (FR); DECODTS, Cédric, 38940 ROYBON (FR); DEMANGE, Fabien, 07130 SAINT PERAY (FR); GEORGES, Didier, 29120 CHABEUIL (FR)
(74) Mandataire: Vidon Brevets & Stratégie

(57) **Abrégé**

La technique proposée se rapporte à une caisse enregistreuse mise en oeuvre au moyen d'un dispositif numérique tactile (400) de type tablette. Le dispositif numérique tactile (400) est fixé sur un module principal (100) qui comprend :
- un bloc central (102);
- un support interchangeable (107) adapté au maintien du dispositif numérique tactile (400) ;
- un bras articulé, dont l'une des extrémités, dite première extrémité, est relié par une première liaison pivot au bloc central (102), et dont l'autre extrémité, dite deuxième extrémité, est reliée par une deuxième liaison pivot à un plateau d'accueil sur lequel est fixé le support interchangeable (107).

La caisse enregistreuse proposée est modulable, et elle comprend optionnellement un module de lecture optique et/ou un module de paiement sur lequel est positionné un terminal de paiement.

## Description

### 1. Domaine

Le domaine de l'invention est celui des caisses enregistreuses. Il concerne plus particulièrement le domaine des caisses enregistreuses qui intègrent un dispositif numérique de type tablette tactile.

### 2. Art antérieur

On connait les caisses enregistreuses classiques, qui prennent la forme d'un dispositif intégré comprenant généralement un clavier alphanumérique, un écran éventuellement tactile, et qui, suivant les modèles, peuvent également inclure divers éléments complémentaires tels qu'un tiroir-caisse ou encore un lecteur de code à barres. Avec ces caisses enregistreuses traditionnelles, le commerçant dispose certes d'un outil suffisant pour effectuer les opérations d'encaissement liées à son activité, mais qui s'avère souvent encombrant, coûteux et peu évolutif. Ces dispositifs classiques peinent par exemple à s'adapter à différentes configurations de comptoir, et leur caractère monobloc, figé, fait qu'un commerçant qui souhaite faire évoluer son activité ou son commerce n'a souvent d'autre choix que de remplacer dans sa totalité une caisse enregistreuse devenue inadaptée à ses nouveaux besoins.

L'essor des tablettes tactiles, de plus en plus puissantes, connectées, peu encombrantes mais disposant néanmoins d'un écran de taille confortable, a permis le développement de nouveaux usages, notamment en milieu professionnel. Des solutions visant à remplacer les caisses enregistreuses traditionnelles par des tablettes tactiles intégrant un logiciel de caisse adapté ont ainsi émergé. Ces solutions offrent de nombreux avantages par rapport aux caisses enregistreuses traditionnelles : elles sont moins coûteuses, plus compactes, et le logiciel de caisse embarqué peut être facilement mis à jour lorsque de nouvelles fonctionnalités sont disponibles. Elles offrent de plus davantage de flexibilité au commerçant, en lui permettant par exemple de privilégier une solution basée sur un modèle de tablette tactile qui lui est familier et qu'il connait bien pour l'utiliser dans d'autres contextes. Par ailleurs, la tablette tactile, dispositif mobile et connecté par nature, ouvre de nouvelles opportunités de travail : cette caisse enregistreuse d'un nouveau genre n'est plus nécessairement attachée à demeure au lieu de commerce, et le commerçant peut par exemple facilement l'emmener avec lui à son domicile ou chez son comptable pour réaliser divers bilans. Néanmoins, une tablette tactile ne se suffit généralement pas à elle-même pour la mise en oeuvre d'une solution de caisse enregistreuse suffisamment fonctionnelle et sûre pour répondre aux besoins du commerçant. Ainsi, pour des raisons pratiques, il est avantageux d'installer la tablette sur un support adapté sur le comptoir. Par ailleurs, en fonction de l'activité exercée par le commerçant, l'ajout de divers éléments complémentaires, comme par exemple un lecteur de codes à barres, un terminal de paiement ou encore une imprimante thermique pour l'impression de tickets de caisses, est généralement nécessaire afin de rendre l'installation opérationnelle. Ces considérations ne sont pas sans contraintes. Ainsi, les supports de tablettes existants sont généralement compatibles avec un nombre limité de tablettes, ce qui peut poser des problèmes lorsqu'un commerçant souhaite changer de modèle de tablette. Par ailleurs, une telle caisse enregistreuse, lorsqu'elle comprend non seulement la tablette tactile et son support mais également les éléments complémentaires essentiels à l'activité du commerçant, forme un ensemble disparate, non intégré, qui s'avère non seulement peu esthétique mais également peu adapté aux exigences de compacité liés à certains commerces. De plus, la tablette n'intègre généralement pas de dispositifs de sécurité respectant les normes en vigueur : il est donc peu prudent de confier l'intégralité de la gestion de la caisse à la tablette.

Les solutions actuelles de caisses enregistreuses présentent donc certains inconvénients, avec d'un côté des caisses enregistreuses classiques intégrées, mais encombrantes, coûteuses et peu évolutives, et de l'autre des caisses enregistreuses basées sur des dispositifs numériques de type tablette tactile, plus évolutives mais souvent peu cohérentes et parfois contraignantes en termes de compatibilité lorsqu'il est nécessaire de leur adjoindre les éléments complémentaires essentiels à une activité donnée.

Il existe donc un besoin de caisses enregistreuses qui répondent à la fois aux besoins de modularité et d'évolutivité des commerçants, tout en offrant néanmoins certaines garanties quant à la cohérence et à la pérennité de la solution retenue.

### 3. Résumé

La technique proposée offre une solution qui ne présente pas au moins certains de ces problèmes de l'art antérieur, grâce à une caisse enregistreuse modulable mise en oeuvre au moyen d'un dispositif numérique tactile de type tablette.

Selon un premier aspect, la technique proposée se rapporte à un module principal de caisse enregistreuse mise en oeuvre au moyen d'un dispositif numérique tactile de type tablette. Un tel module principal comprend :
- un bloc central ;
- un support interchangeable adapté au maintien dudit dispositif numérique tactile ;
- un bras articulé, dont l'une des extrémités, dite première extrémité, est relié par une première liaison pivot audit bloc central, et dont l'autre extrémité, dite deuxième extrémité, est reliée par une deuxième liaison pivot à un plateau d'accueil sur lequel est fixé ledit support interchangeable.

Ainsi, le remplacement d'un dispositif numérique tactile par un autre modèle de dispositif numérique tactile ne nécessite pas le remplacement de l'intégralité du module principal : seul le support interchangeable doit être remplacé par un autre support interchangeable adapté au nouveau modèle de dispositif numérique tactile choisi. Par ailleurs, l'inclinaison du dispositif numérique tactile peut être réglée à la convenance de son utilisateur, au moyen du bras articulé.

Dans un mode de réalisation particulier de la technique proposée, le bloc central intègre une imprimante et présente sur une de ses faces une fente de sortie des impressions de ladite imprimante, ainsi qu'une trappe d'accès à un logement de chargement d'au moins un rouleau de papier pour ladite imprimante.

De cette manière, le module principal comprend de façon intégrée, au sein du bloc central, une imprimante permettant l'impression des tickets et reçus liés à l'activité d'encaissement du commerçant.

Dans un autre mode de réalisation particulier de la technique proposée, la première liaison pivot est un pivot à deux positions, qui permet de faire basculer, au moyen du bras articulé, le dispositif numérique tactile dans :
- une première position, dite position d'utilisation, dans laquelle le dispositif numérique tactile présente une inclinaison favorable à son utilisation ;
- une deuxième position, dite position de chargement, dans laquelle le dispositif numérique tactile est basculé de sorte que la trappe d'accès au logement de chargement d'au moins un rouleau de papier de l'imprimante est accessible.

Ainsi, la première liaison pivot permet libérer l'accès au logement de chargement des rouleaux de papier de l'imprimante, sans perdre le réglage de l'inclinaison du dispositif numérique tactile effectué au moyen de la deuxième liaison pivot. L'inclinaison retenue par le commerçant en position d'utilisation est donc conservée, même lorsque ce dernier a besoin de charger un nouveau rouleau de papier dans le logement dédié.

Dans encore un mode de réalisation particulier de la technique proposée ladite deuxième extrémité du bras articulé et ledit plateau d'accueil sont reliés en outre par une troisième liaison pivot, permettant la rotation dudit plateau d'accueil, et donc dudit dispositif numérique tactile, dans son plan d'inclinaison.

De cette manière, le dispositif numérique tactile peut être orienté en mode portrait ou paysage, selon les besoins du commerçant, sans que son inclinaison d'utilisation - préalablement réglée par le commerçant au moyen de ladite deuxième liaison pivot - ne soit modifiée.

Dans un autre mode de réalisation particulier de la technique proposée, le bloc central comprend des moyens de fixation d'un écran supplémentaire.

Ainsi, outre l'écran du dispositif numérique tactile, un écran supplémentaire, optionnel, à destination des clients, peut être fixé sur le bloc central du module principal. Un cache adapté peut être utilisé pour masquer lesdits moyens de fixation et préserver l'aspect cohérent de la caisse enregistreuse, lorsque le commerçant ne souhaite pas utiliser d'écran supplémentaire.

Selon un deuxième aspect, la technique proposée se rapporte également à un module de paiement, destiné à être couplé à un module principal de caisse enregistreuse tel que décrit précédemment. Ce module de paiement comprend un socle d'accueil pour terminal de paiement, ledit socle comprenant :
- une partie inférieure ;
- une partie supérieure, comprenant un logement apte à recevoir ledit terminal de paiement, ladite partie supérieure étant reliée par une liaison pivot à ladite partie inférieure, ladite liaison pivot permettant à ladite partie supérieure de pivoter dans le plan sensiblement horizontal sur ladite partie inférieure.

Ainsi, le socle d'accueil du terminal de paiement est pivotant, ce qui permet d'orienter le terminal de paiement vers le commerçant ou vers le client en fonction des besoins, même lorsque ce socle est fixé au bâti ou au module principal d'une caisse enregistreuse selon la technique proposée par exemple.

Selon encore un aspect, la technique proposée se rapporte également à un module de lecture optique, destiné à être couplé à un module principal de caisse enregistreuse tel que décrit précédemment. Ce module de lecture optique comprend :
- une première partie, dite partie fixe ;
- une deuxième partie, dite partie amovible, comprenant un dispositif de lecture optique, lesdites parties fixe et amovible comprenant des moyens complémentaires de solidarisation temporaire desdites parties.

De cette manière , le dispositif de lecture optique peut être utilisé dans une configuration fixe, lorsqu'il est solidarisé à la partie fixe (qui peut être fixée au bâti ou à une caisse enregistreuse par exemple), ou dans une configuration mobile, lorsqu'il n'est pas solidarisé à la partie fixe.

Dans un mode de réalisation particulier de la technique proposée, lesdits moyens complémentaires de solidarisation temporaire desdites parties fixe et amovible du module de lecture optique prennent la forme de formes complémentaires aptes à coopérer entre-elles et/ou d'aimants.

Ainsi, le passage de la configuration fixe à la configuration mobile et inversement, pour l'utilisation du dispositif de lecture optique, peut être réalisé rapidement et simplement. Les aimants assurent un maintien suffisant de la partie amovible sur la partie fixe, tout en autorisant un détachage rapide, et les formes complémentaires permettent de garantir que la partie amovible est toujours centrée correctement sur la partie fixe lorsque ces deux parties sont solidaires. Ceci contribue à assurer une utilisation possible du dispositif de lecture optique dans sa configuration fixe, tout en préservant un aspect cohérent pour la caisse enregistreuse.

Dans encore un autre aspect, la technique proposée se rapporte à une caisse enregistreuse mise en oeuvre au moyen d'un dispositif numérique tactile de type tablette, caractérisée en ce que ledit dispositif numérique tactile est fixé sur un module principal tel que décrit précédemment, et en ce ladite caisse enregistreuse comprend, optionnellement :
- un module de paiement tel que décrit précédemment, sur lequel est positionné un terminal de paiement; et/ou
- un module de lecture optique tel que décrit précédemment.

Ainsi, on dispose d'une caisse enregistreuse évolutive, d'une grande modularité, apte à être adaptée rapidement et simplement pour répondre aux différents besoins propres à chaque commerçant.

Les différents modes de réalisation mentionnés ci-dessus sont combinables entre eux pour la mise en oeuvre de la technique proposée.

### 4. Liste des figures

D'autres caractéristiques et avantages de la technique proposée apparaîtront plus clairement à la lecture de la description suivante d'un mode de réalisation préférentiel de la technique proposée, donné à titre de simple exemple illustratif et non limitatif, et des dessins annexés parmi lesquels :
- la figure 1 présente une vue en perspective des différents modules d'une caisse enregistreuse selon un mode de réalisation particulier de la technique proposée ;
- la figure 2 présente une vue en perspective du module principal d'une caisse enregistreuse, côté commerçant, dans un mode de réalisation particulier de la technique proposée ;
- la figure 3 présente une vue en perspective des différents modules d'une caisse enregistreuse, côté client, dans un mode de réalisation particulier de la technique proposée ;
- la figure 4 présente une vue en perspective d'un module de paiement, dans un mode de réalisation particulier de la technique proposée ;
- la figure 5 présente la partie amovible d'un module de lecture optique, dans un mode de réalisation particulier de la technique proposée ;
- la figure 6 présente un schéma de l'agencement des parties fixe et amovible d'un module de lecture optique, dans un mode de réalisation particulier de la technique proposée ;
- les figures 7 à 10 présentent des exemples de configurations de caisses enregistreuses, dans différents modes de réalisation particuliers de la technique proposée.

### 5. Description

Comme indiqué précédemment, l'invention concerne donc une caisse enregistreuse modulable, apte à offrir une solution aux besoins propres à chaque commerçant. Sur toutes les figures du présent document, les éléments identiques sont désignés par une même référence numérique.

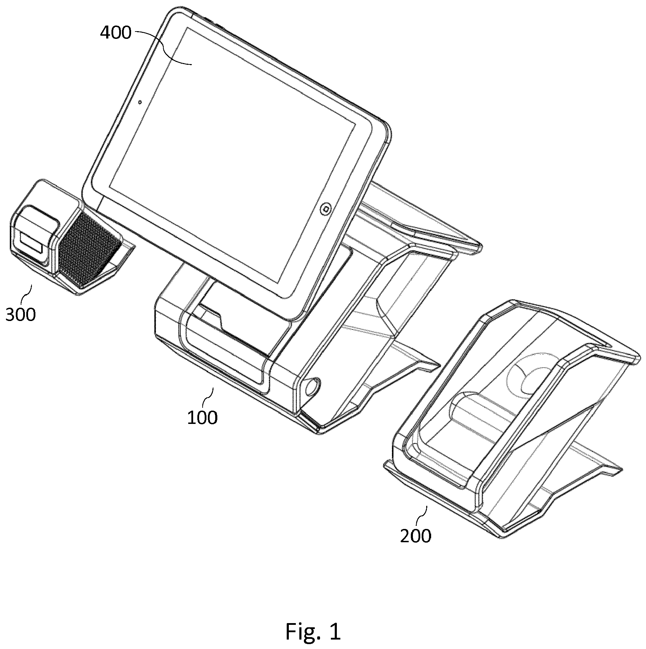

On présente, en relation avec la **figure 1**, une vue en perspective des différents modules susceptibles d'être mis en oeuvre pour former une caisse enregistreuse selon la technique proposée. Une telle caisse enregistreuse comprend un module principal (100) qui peut accueillir un dispositif numérique mobile (400), tel qu'une tablette tactile ou un smartphone par exemple, sur lequel est installé un logiciel de caisse. Optionnellement, une caisse enregistreuse selon la technique proposée comprend des modules complémentaires, tels qu'un module de paiement (200) et/ou un dispositif de lecture optique (300). Dans toute la suite du document, on considère que le dispositif numérique (400) utilisé pour exécuter le logiciel de caisse est une tablette tactile, mais cet exemple est donné à titre purement illustratif et non limitatif.

Ces différents modules et leur agencement pour former une caisse enregistreuse selon la technique proposée sont décrits ci-après.

### 5.1 Module principal

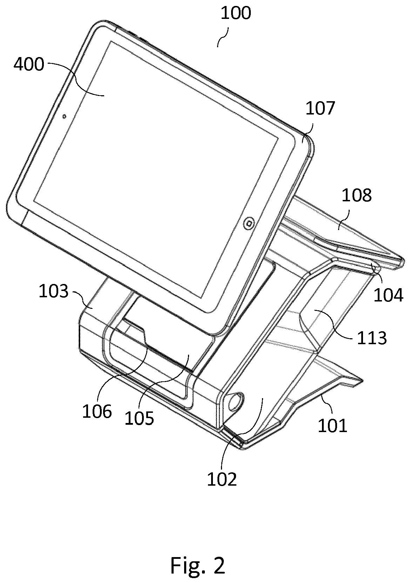

On présente, en relation avec la **figure 2**, un exemple de module principal (100) dans un mode de réalisation particulier de la technique proposée. Ce module principal (100) et la tablette tactile (400) qui y est installée forment le coeur de la caisse enregistreuse selon la technique proposée.

Le module principal (100) comprend un pied (101) solidaire d'un bloc central (102) de forme globalement parallélépipédique. Le pied (101) est destiné à être posé ou fixé sur un élément du bâti, par exemple sur le comptoir d'un commerçant. Le bloc central (102) et son pied (101) sont agencés de telle sorte qu'ils forment entre eux un angle aigu. De cette manière, la face avant (103) et le dessus (104) du bloc central (102) forment des surfaces aisément visibles et accessibles respectivement par un commerçant et un client situés de part et d'autre d'un comptoir où ladite caisse enregistreuse est positionnée.

Dans un mode de réalisation particulier de la caisse enregistreuse proposée, qui présente une intégration optimisée, le bloc central (102) contient une imprimante, et une trappe (105) est aménagée dans la face avant (103) dudit bloc central. Cette trappe (105) permet l'accès à un logement, aménagé dans le bloc central, apte à accueillir au moins un rouleau de papier nécessaire au fonctionnement de l'imprimante. Une fente (106) permet la sortie des tickets et reçus imprimés. Cette fente (106) peut par exemple être aménagée directement dans la partie inférieure de la trappe d'accès (105), ou encore au sein de la face avant du bloc central (103), sous la trappe d'accès (105).

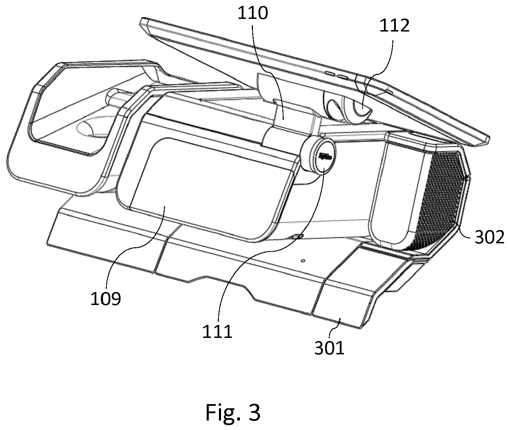

Le module principal (100) comprend un bras articulé (110), visible sur la **figure 3** qui présente une vue arrière en perspective d'une caisse enregistreuse où un module de paiement et un module de lecture optique ont été adjoints au module principal. Ce bras articulé (110) est fixé par une de ses extrémités au bloc central (102), au moyen d'une première liaison pivot (111), dans une zone de jonction entre la face avant (103) et le dessus (104) dudit bloc central (102). L'autre extrémité du bras articulé (110) est reliée par une deuxième liaison pivot (112) à un plateau d'accueil, sur lequel peut être fixé un support interchangeable (107) pour le maintien d'une tablette tactile (400).

La première liaison pivot (111) est un pivot à deux positions, qui permet le basculement total de la tablette tactile (400) et de son support (107) entre une position d'utilisation et une position dite de chargement. En position d'utilisation, la surface de la tablette tactile (400) fait face au commerçant qui peut donc s'en servir pour effectuer les opérations courantes d'encaissement liées à son activité. En position de chargement, la tablette tactile (400) et son support (107) sont basculés vers l'arrière, et libèrent ainsi l'accès à la face avant du bloc central (102). La trappe (105) et le logement de chargement en papier de l'imprimante qu'elle abrite deviennent ainsi accessibles, ce qui permet au commerçant de charger facilement un nouveau rouleau de papier sans que la tablette tactile n'entrave la manipulation.

La deuxième liaison pivot (112) est un pivot multi-positions qui permet au commerçant de régler l'inclinaison de la tablette à sa meilleure convenance, de sorte d'avoir un confort d'utilisation optimal lorsque la tablette tactile (400) est dans la position d'utilisation précédemment décrite.

Contrairement à une solution à une seule pivot, ce mécanisme basé sur deux liaisons pivot (111, 112) permet donc au commerçant de pouvoir basculer la tablette tactile dans la position de chargement grâce à la première liaison pivot (111), sans perdre le réglage de l'inclinaison réalisé au moyen de la deuxième liaison pivot (112). Ainsi, lorsque le commerçant rebascule la tablette en position d'utilisation, après avoir par exemple remplacé le rouleau de papier de l'imprimante, il retrouve l'inclinaison d'utilisation souhaitée.

Dans un mode de réalisation particulier de la technique proposée, une troisième liaison pivot peut être mise en oeuvre entre le plateau d'accueil et l'extrémité du bras articulé qui le soutient. Ce pivot à deux positions, dont l'axe de rotation est perpendiculaire au plan du plateau d'accueil, permet de basculer la tablette en mode « portrait » ou « paysage » selon l'utilisation souhaitée, sans modifier l'inclinaison préalablement réglée par le commerçant au moyen de la deuxième liaison pivot (112).

Comme décrit précédemment, la caisse enregistreuse proposée permet d'accueillir un dispositif numérique du commerçant, typiquement une tablette tactile. Durant la durée de vie de la caisse enregistreuse, le commerçant est susceptible de changer de tablette tactile. Aussi, différents supports sont disponibles, permettant d'accueillir différents modèles de tablettes mais également différents types de dispositifs numériques (des smartphones par exemple). Tous ces supports sont interchangeables, dans le sens où ils sont tous compatibles avec le plateau d'accueil intégré au module principal de la caisse enregistreuse : ils comportent tous des moyens de fixation aptes à coopérer avec des moyens de fixation complémentaires du plateau d'accueil. Divers moyens de fixation peuvent être envisagés (vissage, clipsage, etc.). Dans un mode de réalisation particulier de la technique proposée, la solidarisation du support de tablette (107) sur son plateau d'accueil ne nécessite pas d'outillage, et peut par exemple être réalisée par emboitement d'une partie du plateau d'accueil dans un évidemment adapté du support, suivi d'un mouvement de rotation du support (107) pour achever la solidarisation (l'opération inverse permettant de désolidariser le support de son plateau d'accueil, toujours sans outillage).

L'agencement du bloc central (102) et de son pied (101) font que le dessus (104) du bloc central est naturellement orienté vers un client qui se tiendrait face à un commerçant, de l'autre côté de la caisse enregistreuse selon la technique proposée. Aussi, dans un mode de réalisation particulier, cette surface (104) est particulièrement adaptée à l'installation d'un écran supplémentaire (108), optionnel, orienté vers le client. Le dessus (104) du bloc central (102) comprend donc des moyens de fixations aptes à coopérer avec des moyens de fixation complémentaires présents au dos d'un tel écran supplémentaire (108). Avantageusement, ces moyens de fixation sont des moyens de clipsage, qui permettent de fixer l'écran supplémentaire (108) au bloc central (102) rapidement, facilement, et sans outillage. L'utilisation d'un tel écran est optionnelle, et cet aspect contribue donc au caractère modulable de la caisse enregistreuse proposée. Un cache amovible (109) qui présente en son dos des moyens de fixation (par exemple de clipsage) complémentaires à ceux présents sur le dessus du bloc central permet au commerçant qui ne souhaite pas utiliser d'écran supplémentaire de masquer les moyens de fixation et de préserver ainsi un aspect cohérent de la caisse enregistreuse, côté client.

Le module principal comprend également au moins un module de traitement de données transactionnelles. Un tel module de traitement de données transactionnelles se présente par exemple comme une combinaison d'un processeur de traitement (de type processeur sécurisé) et d'une mémoire (qui peut également être sécurisée). Ce module, de manière avantageuse, comprend également des circuits de connexion ou des interfaces matérielles avec des modules complémentaires (tels que les modules complémentaires décrits par la suite, par exemple un module de paiement et un module de lecture optique). Ce module offre des fonctionnalités de traitement (par exemple sécurisé) des données circulant entre les modules complémentaires (lorsqu'ils sont installés) et des données circulant entre la caisse enregistreuse et un réseau de communication auquel cette caisse enregistreuse est connectée. Plus particulièrement, un tel module peut avantageusement servir d'interface entre un réseau d'un prestataire de services de paiement (tel qu'un réseau bancaire) et un terminal de paiement connecté au module principal par l'intermédiaire d'un câble réseau ou d'une interface réseau sans fil. Un tel module de traitement de données peut également servir d'interface avec la tablette tactile (400), afin d'offrir une communication sécurisée avec ce dispositif. Ainsi, un tel arrangement permet d'éviter une usurpation ou une modification des données gérées par la tablette tactile (400). Selon un mode de réalisation avantageux, le module de traitement embarque en son sein une partie plus ou moins importante d'une application de gestion de caisse enregistreuse et la tablette tactile embarque la partie manquante complémentaire, de sorte que les deux parties se reconnaissent mutuellement : ainsi, le fonctionnement de la caisse enregistreuse est sécurisé.

Selon un autre aspect de l'invention, des modules complémentaires optionnels peuvent être adjoints de part et d'autre du module principal, de sorte d'enrichir les fonctionnalités offertes par la caisse enregistreuse. Ces modules complémentaires, qui comprennent un module de paiement et un module de lecture optique, sont décrits ci-après.

### 5.2 Module de paiement

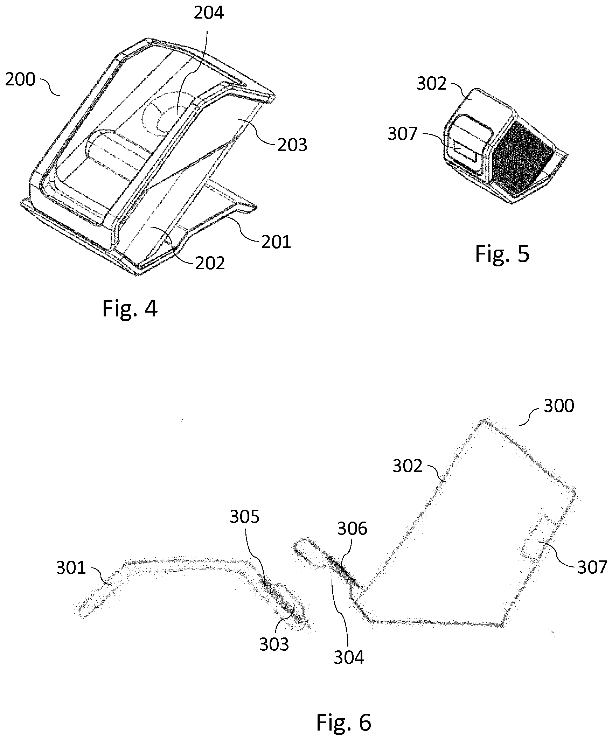

Selon un autre aspect, la technique proposée se rapporte donc également à un module de paiement qui peut être utilisé conjointement avec le module principal de caisse enregistreuse décrit précédemment. Ce module de paiement (200) est présenté en relation avec la **figure 4**, dans un mode de réalisation particulier. Il comprend un socle en deux parties (202, 203), monté sur un pied (201). Ce socle est destiné à accueillir un terminal de paiement (non représenté sur la figure 4). La partie inférieure (202) du socle est solidaire de son pied (201). La partie supérieure (203) du socle comprend un logement dans lequel le terminal de paiement peut être installé. Cette partie supérieure (203) est reliée à la partie inférieure (202) par une liaison pivot (204).

En fonction des besoins d'un commerçant (par exemple en fonction de la forme de son comptoir, de l'espace disponible, etc.), le module de paiement (200) peut être utilisé dans une configuration où il est solidarisé avec le module principal (100) de la caisse enregistreuse, ou encore dans une autre configuration où il est désolidarisé du module principal (100).

En configuration « solidarisée », la solidarisation du module de paiement (200) avec le module principal (100) peut par exemple être réalisée au moyen d'une pièce de liaison, montée sous le pied (101) du module principal et sous le pied (201) du module de paiement, et reliant ces deux pieds (101, 201) entre eux. Avantageusement, ces deux pieds (101, 201) présentent un même profil, et ménagent avec le plan sur lequel ils sont posés un espace pour l'installation de cette pièce de liaison. De cette manière, la pièce de liaison est invisible une fois montée. Cet espace peut également être mis à profit pour le passage de câbles divers. Outre la similarité des profils de pieds (101, 201), le socle du module de paiement et son pied (201) forment avantageusement entre eux un angle similaire à celui formé entre le bloc central (102) et le pied (101) du module principal. De cette manière, la caisse enregistreuse conserve un aspect cohérent et intégré, lorsque le module de paiement (200) est utilisé dans la configuration où il est solidarisé avec le module principal (100).

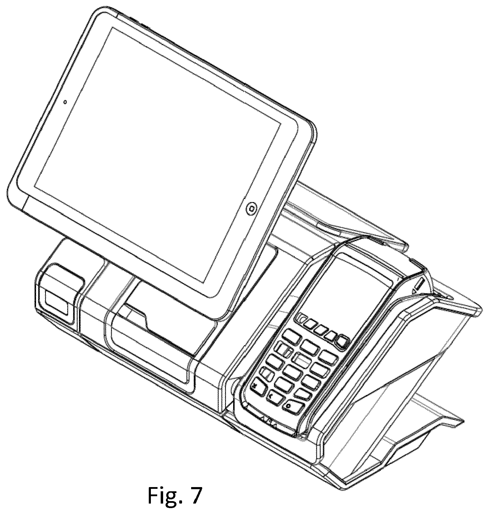

La liaison pivot (204) permet de faire pivoter la partie supérieure (203) du socle sur sa partie inférieure (202), dans un plan horizontal ou proche. Ainsi, même lorsque le module de paiement (200) est solidarisé avec le module principal (100), un terminal de paiement installé dans ce socle pivotant peut être orienté en fonction des besoins ou bien vers le commerçant ou bien vers le client par un pivotement à 180° dans le plan horizontal. Le terminal de paiement reste également utilisable dans toutes les positions intermédiaires entre ces deux positions, ce qui peut s'avérer utilie pour certaines configurations particulières de comptoir (où le client se tient naturellement sur le côté du commerçant, par exemple). Afin que le bloc central (102) du module principal n'entrave pas le pivotement de la partie supérieure (203) du socle sur sa partie inférieure (202), la largeur du socle est inférieure à la largeur de son pied (201). De cette manière, même lorsque les pieds (101, 201) du module principal (100) et du module de paiement (200) sont solidarisés entre eux, un espace existe entre le socle du module de paiement et le bloc central (102) du module principal, qui permet à la partie supérieure de pivoter librement sur une plage angulaire au moins supérieure ou égale à 180° (cet espace est par exemple visible sur la figure 7). Dans un mode de réalisation particulier de la technique proposée, afin que la caisse enregistreuse reste la plus compacte et intégrée possible, une cavité (113) peut être aménagée sur le côté du bloc central (102), de sorte de limiter la taille de l'espace tout en autorisant toujours le pivotement de la partie supérieure (203) sur la partie inférieure (202).

### 5.3 Module de lecture optique

Selon encore un autre aspect, la technique proposée se rapporte également à un module de lecture optique qui peut être utilisé conjointement avec le module principal de caisse enregistreuse décrit précédemment. Ce module prend par exemple la forme d'un lecteur de code à barres, et permet au commerçant de scanner les produits qu'un client souhaite acquérir.

Le module de lecture optique (300) proposé comprend deux parties (301, 302) visibles sur la figure 3. La partie (301) est dite partie fixe, dans le sens où elle est destinée à être solidarisée avec le module principal (100) d'une caisse enregistreuse selon la technique proposée. Dans un mode de réalisation particulier, la solidarisation de ces deux éléments peut par exemple être réalisée au moyen d'une pièce de liaison, montée sous le pied (101) du module principal et sous la partie fixe (301) du module de lecture optique, et reliant ces deux éléments (101, 301) entre eux. Avantageusement, le profil de la partie fixe (301) suit au moins en partie le profil du pied (101) du module principal, de sorte que ces deux éléments (101, 301) ménagent avec le plan sur lequel ils sont posés un espace pour l'installation de cette pièce de liaison. De cette manière, la pièce de liaison est invisible une fois montée, et cet espace peut également être mis à profit pour le passage de câbles divers. L'autre partie (302) du module de lecture optique (300) est une partie amovible, qui comprend le dispositif de lecture optique, par exemple un lecteur de codes à barres. Cette partie amovible (302) est présentée en relation avec la **figure 5**, dans un mode de réalisation particulier.

La partie fixe (301) et la partie amovible (302) disposent de moyens complémentaires permettant d'assurer une solidarisation temporaire de ces deux éléments (301, 302). Ces moyens de solidarisation sont présentés en relation avec la **figure 6**, dans un mode de réalisation particulier de la technique proposée. Ils consistent en une coopération de formes complémentaires (303, 304) et/ou d'aimants (305, 306), qui assurent un maintien et un centrage correct de la partie amovible (302) lorsque celle-ci prend appui sur la partie fixe (301). De cette manière, la caisse enregistreuse conserve un aspect cohérent et intégré, lorsque ces deux parties (301, 302) du module de lecture optique (300) sont solidarisées. Par ailleurs, le module de lecture optique peut être utilisé pour scanner des produits même dans cette configuration, de par le positionnement de la lentille (307) du dispositif de lecture optique et de par la conformation et le dimensionnement de la partie amovible (302), comme cela est montré par exemple en relation avec les figures 6 et 7. Bien entendu, le commerçant peut lorsqu'il le souhaite détacher la partie amovible (302) - et donc le dispositif de lecture optique - de la partie fixe (301), par exemple pour scanner un produit trop volumineux pour être présenté devant la caisse enregistreuse.

### 5.4 Exemples de configurations de caisses enregistreuses modulables

A titre illustratif mais non limitatif, on présente, en relation avec les figures 7 à 10, différents exemples de configurations possibles de caisses enregistreuses selon la technique proposée, dans différents cas d'utilisation.

La **figure 7** montre une vue en perspective d'une caisse enregistreuse dans un mode de réalisation particulier de la technique proposée. Cette caisse enregistreuse comprend, en plus du module principal, les deux modules complémentaires que sont le module de paiement et le module de lecture optique. La caisse enregistreuse est présentée sous sa forme compacte : le module de paiement est solidarisé avec le module principal, et la partie amovible du module de lecture optique repose sur sa partie fixe. Comme exposé précédemment, même dans cette configuration compacte, la caisse enregistreuse conserve un aspect intégré et cohérent, et reste pleinement opérationnelle : les produits peuvent être scannés en les présentant devant la lentille du module de lecture optique, et le terminal de paiement peut pivoter pour être présenté face au client (on distingue sur cette figure l'espace entre le socle du module de paiement et le bloc central du module principal, ainsi que la cavité présente dans le flanc du bloc central, qui autorisent ce pivotement à 180°). Par ailleurs le module principal intègre une imprimante pour tickets de caisse, et il accueille également un écran supplémentaire, orienté vers le client.

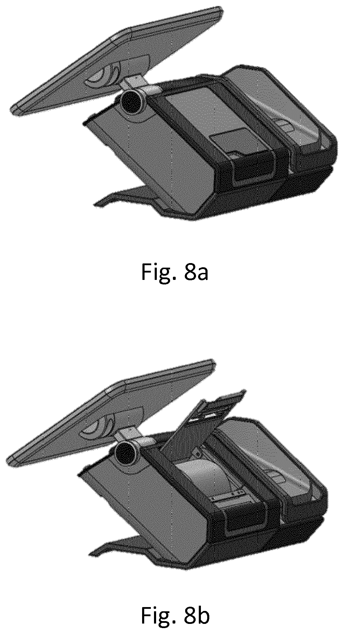

Les **figures 8a et 8b** présentent une caisse enregistreuse selon un autre mode de réalisation particulier de la technique proposée. Cette caisse enregistreuse ne comprend pas de module de lecture optique. Les figures 8a et 8b exposent une situation dans laquelle la tablette tactile est basculée vers l'arrière, dans sa position de chargement qui permet d'accéder à la trappe permettant par exemple le remplacement du rouleau de papier de l'imprimante. Les bascules entre position de chargement et position d'utilisation n'ont pas d'incidence sur le réglage effectué par le commerçant pour ajuster l'inclinaison de sa tablette en mode d'utilisation.

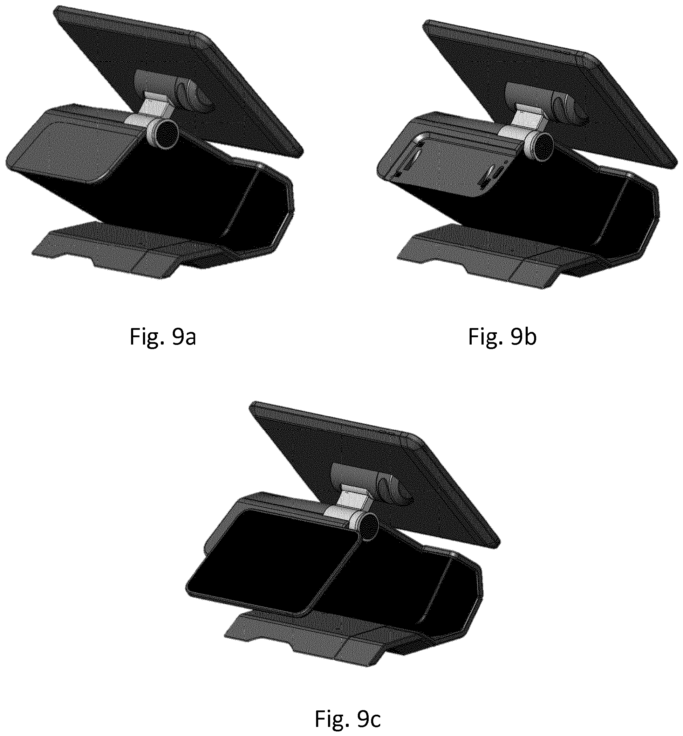

Les **figures 9a, 9b et 9c** présentent une caisse enregistreuse selon encore un autre mode de réalisation particulier de la technique proposée. Cette caisse enregistreuse ne comprend pas de module de paiement. La caisse enregistreuse est vue côté client dans différentes situations : sans écran supplémentaire mais avec un cache permettant de masquer les moyens de fixation d'un tel écran (figure 9a), sans écran supplémentaire avec le cache retiré (figure 9b), et enfin avec écran supplémentaire (figure 9c).

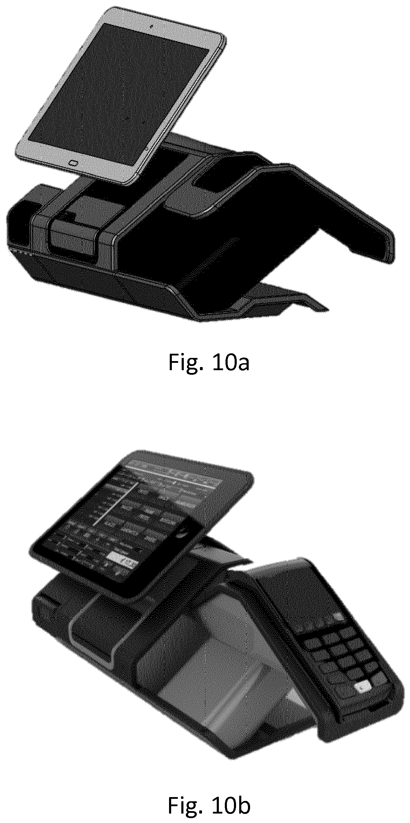

Les **figures 10a et 10b** montrent une caisse enregistreuse selon encore un autre mode de réalisation particulier de la technique proposée. Cette caisse enregistreuse comprend, en plus du module principal, les deux modules complémentaires que sont le module de paiement et le module de lecture optique. Sur ces figures, on peut voir la tablette orientée en mode portrait (figure 10a) ou paysage (figure 10b), ainsi que différentes orientations du socle pivotant du module de paiement, permettant de présenter un terminal de paiement à un client tout en conservant ce terminal de paiement intégré à la caisse enregistreuse.

La technique proposée se rapporte donc à une caisse enregistreuse de grande modularité, qui offre beaucoup de flexibilité au commerçant.

Le module principal d'une part est évolutif. Il peut intégrer ou non une imprimante pour tickets de caisse, un écran supplémentaire à destination des clients peut facilement et rapidement être ajouté, et la tablette tactile qui sert de coeur au dispositif peut facilement être remplacée par un modèle plus récent ou d'un autre constructeur grâce à son support interchangeable.

Par ailleurs, des modules complémentaires peuvent venir se greffer au module principal, en fonction des besoins propres à chaque commerçant. Ces modules complémentaires comprennent un module de paiement, pour l'intégration d'un terminal de paiement, et un module de lecture optique. Comme décrit précédemment, ces modules complémentaires peuvent être solidarisés de part et d'autre du module principal, ou encore également être utilisés dans un mode où ils sont détachés du module principal. La technique proposée permet donc d'assembler très simplement des caisses enregistreuses « sur-mesure », à même de s'adapter à de multiples configurations de comptoirs et d'espaces. Les modules complémentaires sont par ailleurs dimensionnés et conformés de sorte que la caisse enregistreuse conserve un aspect intégré et cohérent, lorsqu'ils sont solidarisés avec son module principal. Ces modules complémentaires sont optionnels. Ainsi la caisse enregistreuse selon la technique proposée peut répondre à un grand nombre de besoins, de celui, basique, où le seul module principal et sa tablette suffisent à celui, plus évolué, qui nécessite en plus des solutions de paiement et/ou de lecture optique.

## Revendications

1. Module principal (100) de caisse enregistreuse mise en oeuvre au moyen d'un dispositif numérique tactile (400) de type tablette, module **caractérisé en ce qu'**il comprend :
- un bloc central (102) ;
- un support interchangeable (107) adapté au maintien dudit dispositif numérique tactile (400) ;
- un bras articulé (110), dont l'une des extrémités, dite première extrémité, est relié par une première liaison pivot (111) audit bloc central (102), et dont l'autre extrémité, dite deuxième extrémité, est reliée par une deuxième liaison pivot (112) à un plateau d'accueil sur lequel est fixé ledit support interchangeable (107).

2. Module principal de caisse enregistreuse selon la revendication 1, **caractérisé en ce que** ledit bloc central intègre une imprimante et présente sur une de ses faces une fente de sortie des impressions de ladite imprimante, ainsi qu'une trappe d'accès à un logement de chargement d'au moins un rouleau de papier pour ladite imprimante.

3. Module principal de caisse enregistreuse selon la revendication 2, **caractérisé en ce que** ladite première liaison pivot est un pivot à deux positions, qui permet de faire basculer, au moyen dudit bras articulé, ledit dispositif numérique tactile dans :
- une première position, dite position d'utilisation, dans laquelle le dispositif numérique tactile présente une inclinaison favorable à son utilisation ;
- une deuxième position, dite position de chargement, dans laquelle le dispositif numérique tactile est basculé de sorte que ladite trappe d'accès au logement de chargement d'au moins un rouleau de papier de ladite imprimante est accessible.

4. Module principal de caisse enregistreuse selon l'une quelconque des revendications 1 à 3, **caractérisé en ce que** ladite deuxième extrémité dudit bras articulé et ledit plateau d'accueil sont reliés en outre par une troisième liaison pivot, permettant la rotation dudit plateau d'accueil, et donc dudit dispositif numérique tactile, dans son plan d'inclinaison.

5. Module principal de caisse enregistreuse selon l'une quelconque des revendications 1 à 4 **caractérisé en ce que** ledit bloc central comprend des moyens de fixation d'un écran supplémentaire.

6. Module de paiement, destiné à être couplé à un module principal de caisse enregistreuse selon l'une quelconque des revendications 1 à 5, **caractérisé en ce qu'**il comprend un socle d'accueil pour terminal de paiement, ledit socle comprenant :
- une partie inférieure ;
- une partie supérieure, comprenant un logement apte à recevoir ledit terminal de paiement, ladite partie supérieure étant reliée par une liaison pivot à ladite partie inférieure, ladite liaison pivot permettant à ladite partie supérieure de pivoter dans le plan sensiblement horizontal sur ladite partie inférieure.

7. Module de lecture optique, destiné à être couplé à un module principal de caisse enregistreuse selon l'une quelconque des revendications 1 à 5, **caractérisé en ce qu'**il comprend :
- une première partie, dite partie fixe ;
- une deuxième partie, dite partie amovible, comprenant un dispositif de lecture optique, lesdites parties fixe et amovible comprenant des moyens complémentaires de solidarisation temporaire desdites parties.

8. Module de lecture optique selon la revendication 7, **caractérisé en ce que** lesdits moyens complémentaires de solidarisation temporaire desdites parties fixe et amovible prennent la forme de formes complémentaires aptes à coopérer entre-elles et/ou d'aimants.

9. Caisse enregistreuse mise en oeuvre au moyen d'un dispositif numérique tactile de type tablette, **caractérisée en ce que** ledit dispositif numérique tactile est fixé sur un module principal selon l'une quelconque des revendications 1 à 5, et en ce ladite caisse enregistreuse comprend, optionnellement :
- un module de paiement selon la revendication 6, sur lequel est positionné un terminal de paiement ; et/ou
- un module de lecture optique selon l'une quelconque des revendications 7 et 8.
